**Europäisches Patentamt**

**European Patent Office**

**Office européen des brevets**

(19)

(11) Veröffentlichungsnummer : **0 365 772 B1**

(12)

# EUROPÄISCHE PATENTSCHRIFT

(45) Veröffentlichungstag der Patentschrift :
08.07.92 Patentblatt 92/28

(51) Int. Cl.$^5$ : **F16H 47/04**

(21) Anmeldenummer : **89114686.2**

(22) Anmeldetag : **09.08.89**

---

(54) **Antriebseinrichtung, insbsondere für ein extremgeländegängiges Radfahrzeug.**

---

(30) Priorität : **22.10.88 DE 3836017**

(43) Veröffentlichungstag der Anmeldung :
**02.05.90 Patentblatt 90/18**

(45) Bekanntmachung des Hinweises auf die
Patenterteilung :
**08.07.92 Patentblatt 92/28**

(84) Benannte Vertragsstaaten :
**DE FR GB IT NL SE**

(56) Entgegenhaltungen :
**DE-C- 2 904 572**
**US-A- 3 897 697**
**US-A- 3 903 755**

(73) Patentinhaber : **MAN Nutzfahrzeuge
Aktiengesellschaft
Dachauer Strasse 667 Postfach 50 06 20
W-8000 München 50 (DE)**

(72) Erfinder : **Hagin, Faust, Dipl.-Ing.
Poccistrasse 2
W-8000 München 2 (DE)**
Erfinder : **Drewitz, Hans, Ing. (grad)
Agnesstrasse 59
W-8000 München 40 (DE)**

EP 0 365 772 B1

**Beschreibung**

Die Erfindung betrifft eine Antriebseinrichtung, insbesondere für ein extremgeländegängiges Radfahrzeug, mit Merkmalen der im Oberbegriff des Anspruchs 1 angegebenen Art.

Eine Antriebseinrichtung mit solchen Merkmalen ist beispielsweise aus der DE-C-29 04 572 bekannt. Bei hiernach beispielsweise für Stadt-Linienbusse realisierten Fahrzeugantrieben kam ein hydrostatisch-mechanisches Leistungsverzweigungsgetriebe mit einem vierwelligen Planetendifferential und zwei verstellbaren, als Motor oder Pumpe betreibbaren Hydrostatmaschinen zur Anwendung, von denen jede eine Eckleistung in der Größenordnung der Leistung des Antriebsmotors übertragen konnte. Durch diese Antriebskonstellation ist zwischen Antriebsmotor und Achsantriebsstrang eine Erhöhung des Wandlungsbereiches in der Größenordnung von Faktor 6 erzielbar. Diese Momentenerhöhung ist im Fall von Omnibussen oder normalen Nutzfahrzeugen durchwegs ausreichend.

Bei Antriebssträngen mit notwendig hohem Wandlungsbereich, beispielsweise von extremgeländegängigen Radfahrzeugen, könnte eine solche Antriebseinrichtung insofern nicht befriedigen, weil die genannte Erhöhung des Wandlungsbereiches (um Faktor 6) insbesondere für Anfahren und bei Kriechgang-Fahrt in schwierigem Gelände nicht ausreicht. Ein ausreichender Gesamtwandlungsbereich wäre bei einer solchen Anwendung erst durch eine Momentenerhöhung zwischen Antriebsmotor und Achsantriebsstrang um einen Faktor in der Größenordnung von etwa 25 bei voller Motorleistung gegeben.

Es ist daher Aufgabe der Erfindung, eine Antriebseinrichtung der eingangs genannten Art dahingehend weiterzubilden, daß beim Anfahren und bei Kriechgangfahrt ein notwendig hoher Gesamtwandlungsbereich in der Größenordnung von etwa 25 bereitstellbar ist.

Diese Aufgabe ist erfindungsgemäß durch Weiterbildung der Antriebseinrichtung der eingangs genannten Art mit Merkmalen entsprechend dem Kennzeichen des Anspruches 1 gelöst.

Vorteilhafte Ausgestaltungen der Erfindung sind in den Unteransprüchen gekennzeichnet.

Durch die erfindungsgemäße Getriebekonfiguration sowie durch die erfindungsgemäße Art der Getriebe-Steuerung ist es möglich, im Fall des Einsatzes in einem Fahrzeug während der Fahrt, ohne vorher anhalten zu müssen, aus normaler Fahrgeschwindigkeit in eine Getriebestufe zu schalten, mit der eine vergleichsweise langsame Kriechgang-Fahrt mit extrem überhöhtem Antriebsmoment durchführbar ist. Ebenso ist es möglich, aus einer solchen Kriechgang-Fahrt ohne anzuhalten in eine Getriebeübersetzung umzuschalten, die dann sofort einen Normalfahrtbetrieb ermöglicht. Die jeweiligen Umschaltungen erfolgen ruckfrei und ohne Zugkraftunterbrechung.

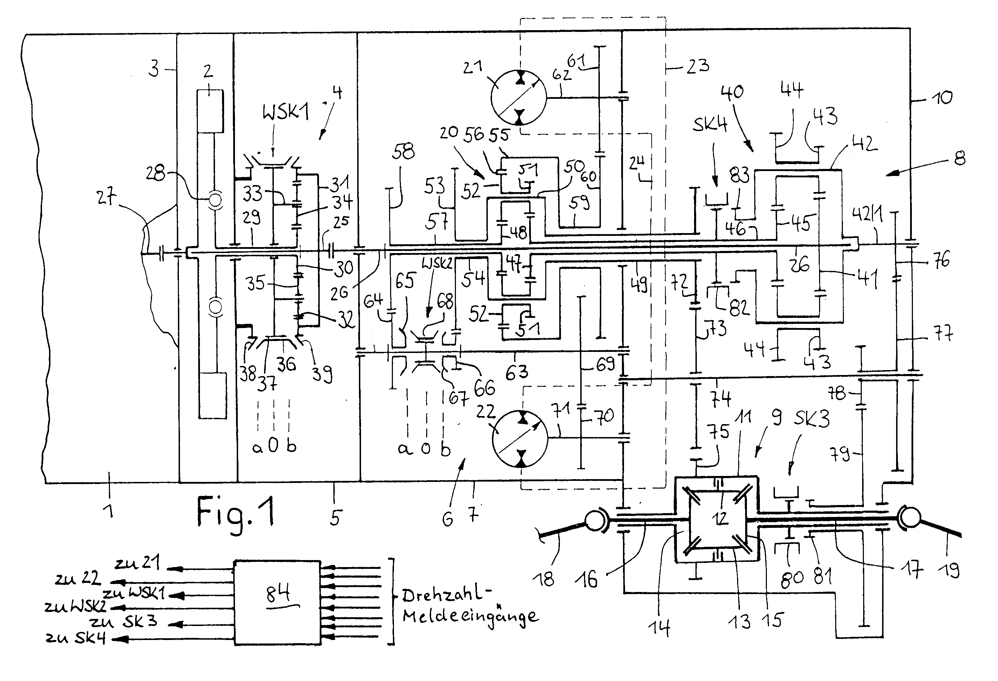

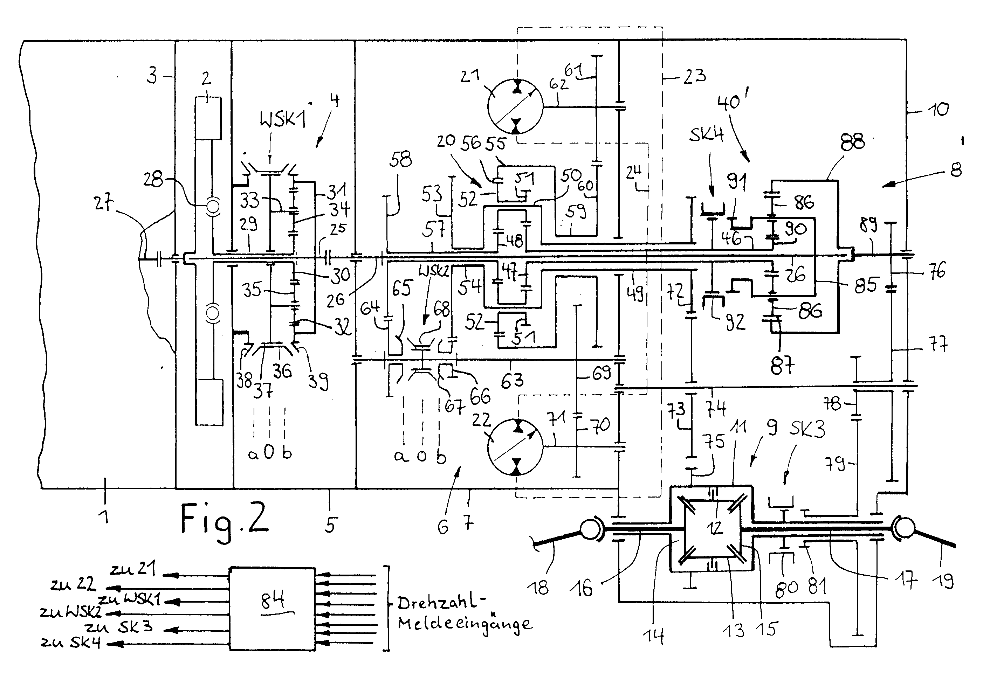

Nachstehend ist die erfindungsgemäße Lösung anhand zweier in der Zeichnung dargestellter Ausführungsbeispiele näher erläutert, wovon je eines in Fig. 1 und Fig. 2 gezeigt ist. Unterschiede zwischen den Darstellungen in beiden Figuren bestehen nur im Bereich der Planetendifferentiale 40 bzw. 40', wobei jenes (40') gemäß Fig. 2 weniger Bauraum beansprucht und kompakter realisierbar ist als jenes (40) gemäß Fig. 1.

In der Zeichnung sind als Teile eines insbesondere zum Betrieb eines extremgeländegängigen Radfahrzeuges dienenden Antriebsstranges mit 1 ein Antriebsmotor, insbesondere Dieselmotor, mit 2 ein in einem Gehäuse 3 rotierendes Schwungrad, mit 4 ein in einem Gehäuse 5 untergebrachtes, zur Umschaltung von Vorwärts- auf Rückwärtsantrieb dienendes Wendegetriebe, mit 6 ein in einem Gehäuse 7 untergebrachtes hydrostatisch-mechanisches Leistungsverzweigungsgetriebe und mit 8 ein Momentenerhöhungsgetriebe bezeichnet, dessen Teile zusammen mit einem Verteilerdifferential 9 in einem Gehäuse 10 untergebracht ist.

Innerhalb der drehbar gelagerten, angetriebenen Eingangswelle 11 des Verteilerdifferentials 9 wird über zwei mitrotierende Ausgleichskegelräder 12, 13 und zwei mit diesen in Eingriff stehenden Abtriebskegelrädern 14, 15 die Abtriebsleistung an zwei an je einem der letzteren angeschlossene Abtriebswellen 16, 17 und von diesen an daran angekoppelte Achsantriebsstränge 18 bzw. 19 weitergeleitet.

Dem Momentenerhöhungsgetriebe 8 ist antriebsmäßig das Wendegetriebe 4 vorgeschaltet und das Leistungsverzweigungsgetriebe 6 nachgeschaltet.

Das Leistungsverzweigungsgetriebe 6 ist generell durch ein vierwelliges Planetendifferential 20 und wenigstens zwei Hydrostatmaschinen 21, 22 gebildet. Letztere können jeweils in beiden Richtungen als Motor oder Pumpe betrieben werden, sind verstellbar und stehen über hydraulische Leitungen 23, 24 miteinander in Verbindung.

Kernstück der gesamten Getriebeanordnung ist eine aus mehreren Teilen 25, 26 zusammengesetzte Zentralwelle, an der die einzelnen Teilgetriebe in nachstehend beschriebener Weise angeschlossen sind und die einenendes im Zentrum des Schwungrades 2, anderenendes in einem rotierenden Getriebeglied, jeweils in einer geeigneten Aufnahme gelagert ist.

Das zwischen dem an der Kurbelwelle 27 des Antriebsmotors 1 angekoppelten Schwungrad 2 und der Zentralwelle 25, 26 eingeschaltete Wendegetriebe 4 dient unabhängig von seinem konkreten Aufbau dazu, die Drehrichtung der Zentralwelle 25, 26 beim Wechsel der Fahrtrichtung (Vorwärts/Rückwärts) jeweils umzukeh-

EP 0 365 772 B1

ren.

Das in der Zeichnung dargestellte Wendegetriebe 4 ist außerdem so aufgebaut, daß bei Rückwärtsfahrt ein erhöhtes Antriebsmoment wirksam werden kann, und zwar aufgrund einer gegenüber Vorwärtsfahrt anderen Übersetzung.

Das frei gegenüber der Zentralwelle 25, 26 rotierende Schwungrad 2 ist über eine geeignete Kupplung 28 mit der als Hohlwelle ausgebildeten Eingangswelle 29 des Wendegetriebes 4 verbunden. Die Eingangswelle 29 ist koaxial zur Zentralwelle 25, 26 angeordnet und trägt ein Sonnenrad 30 als Teil eines Planetendifferentials. Letzteres besteht des weiteren aus einem die Verbindung des Wendegetriebes 4 zur Zentralwelle 25, 26 herstellenden, drehfest an dieser angeordneten Hohlrad 31, mit dessen Innenverzahnung 32 und dem Sonnenrad 30 von einem Steg 33 drehbar gelagerte Planetenräder 34, 35 in Eingriff stehen. Zur mechanischen Umschaltung von Vorwärts- auf Rückwärtsdrehrichtung dient eine Wechsel-Schalt-Kupplung WSK1, deren aus einer neutralen antriebslosen "0"-Stellung nach der einen oder anderen Richtung axial in eine Kupplungsstellung "a" oder "b" verschiebbare Kupplungsmuffe 36 in fester Antriebsverbindung mit einer am Steg 33 angeschlossenen Mitnehmerhülse 37 steht.

Bei Verschiebung in Kupplungsstellung "a" kommt die Kupplungsmuffe 36 mit einem drehfest innen am Gehäuse 5 koaxial zur Zentralwelle 25, 26 angeordneten Kupplungsring 38 in Eingriff, wodurch eine starre Verbindung zwischen letzterem und dem Steg 33 hergestellt ist, letzterer somit nicht mehr um die Eingangswelle 29 rotieren kann. Die Antriebsübertragung vom Schwungrad 2 zur Zentralwelle 25, 26 ist in diesem Fall dann über die Eingangswelle 29, das Sonnenrad 30, die räumlich festgehaltenen, aber am Steg 33 drehbaren Planetenräder 34, 35 und das Hohlrad 31 gegeben. Dieser Kupplungszustand "a" der Wechsel-Schalt-Kupplung WSK1 wird für Rückwärtsfahrt des Fahrzeuges hergestellt.

Bei Verschiebung in Kupplungsstellung "b" kommt die Kupplungsmuffe 36 mit einem fest außen am Hohlrad 31 angeordneten Kupplungsring 39 in Eingriff. Hierdurch ergibt sich eine starre Verbindung zwischen Steg 33 und Hohlrad 31, das Planetendifferential ist gesperrt, Antriebsleistung wird somit vom Schwungrad 2 direkt über das verblockt mit der Eingangswelle 29 mitrotierende Planetendifferential auf die Zentralwelle 25, 26 übertragen. Dieser Schaltzustand "b" der Wechsel-Schalt-Kupplung WSK1 wird für Vorwärtsfahrt des Fahrzeugs hergestellt.

Das vom Schwungrad 2 über das Wendegetriebe 4 in die Zentralwelle 25, 26 eingeleitete Motorantriebsmoment wird von der Zentralwelle 25, 26 einem Planetendifferential 40 (Fig. 1) bzw. 40′ (Fig. 2) zugeführt, das Teil des Momentenerhöhungsgetriebes 8 ist. Von diesem Planetendifferential (40 bzw. 40′) ist unter Zuhilfenahme zweier Synchron-Schaltkupplungen SK3, SK4 je nach Schaltzustand derselben das von der Zentralwelle 25, 26 her eingespeiste Antriebsmoment entweder

a) vollständig als Eingangsmoment dem Leistungsverzweigungsgetriebe (6) zuführbar, oder

b) in einem bestimmten Verhältnis in ein Eingangsmoment für das Leistungsverzweigungsgetriebe (6) und ein Abtriebsmoment aufteilbar, welch letzteres der Welle 11 zuführbar,

wobei der Zustand b) im Betriebsbereich von < 0,2 $n_{abmax}$ der Welle 11 gegeben ist und der Wechsel in Zustand a) bei Synchrondrehzahl zwischen eingangsseitiger und ausgangsseitiger Hauptwelle des Planetendifferentials 40 bzw. 40′ erfolgt.

Das besagte Eingangsmoment für das Leistungsverzweigungsgetriebe 6 wird bei offener Synchron-Schalt-Kupplung SK4 im Beispiel gemäß Fig. 1 vom großen, drehfest an der Zentralwelle 25, 26 angeordneten Sonnenrad 41 des Planetendifferentials 40 an mit ihm kämmende, drehbar auf einem Steg 42 gelagerte Planetenräder 43 abgegeben und von mit je einem der letzteren koaxial verbundenen durchmessergrößeren Planetenrädern 44 auf ein kleines Sonnenrad 45 des Planetendifferentials 40 übertragen. Dieses Sonnenrad 45 ist über eine Hohlwelle 46, die die eingangsseitige Hauptwelle des vierwelligen Planetendifferentials 20 des Leistungsverzweigungsgetriebes 6 bildet, drehfest mit dem großen Sonnenrad 47 des letzteren verbunden.

Beim Beispiel gemäß Fig. 2 wird das besagte Eingangsmoment für das Leistungsverzweigungsgetriebe 6 bei offener Synchron-Schalt-Kupplung SK4 vom drehfest an der Zentralwelle 25, 26 angeordneten Steg 85 über darauf drehbar gelagerte Planetenräder 86 an ein mit diesem kämmendes Sonnenrad 90 abgegeben, das über die Hohlwelle 46 in gleicher Weise wie im Fall gemäß Fig. 1 mit dem großen Sonnenrad 47 des Planetendifferentials 20 im Leistungsverzweigungsgetriebe 6 verbunden ist.

Das große Sonnenrad 47 des Planetendifferentials 20 verteilt innerhalb des Leistungsverzweigungsgetriebes 6 die zugeführte Leistung. Das Planetendifferential 20 umfaßt außer dem großen Sonnenrad 47 ein kleines Sonnenrad 48, ferner mehrere jeweils drehbar auf einem fest mit der Ausgangshohlwelle 49 des Leistungsverzweigungsgetriebes 6 verbundenen Steg 50 gelagerte Doppelplanetenräder 51, 52, außerdem eine mit dem Steg 50 koaxial verbundene sowie drehfest ein Zahnrad 53 tragende Hohlwelle 54 und ein Hohlrad 55. Letzteres besitzt eine Innenverzahnung 56, mit der die Planetenräder 52 kämmen.

Das kleine Sonnenrad 48 ist drehfest an einer Hohlwelle 57 angeordnet, die koaxial zur Zentralwelle 25, 26 angeordnet ist, außerdem die Hohlwelle 54 lagert und drehfest ein Zahnrad 58 trägt. Drehfest mit dem Hohl-

3

rad 55 ist über eine Nabe 59 ein Zahnrad 60 angeordnet, das mit einem Zahnrad 61 kämmt, welches fest auf einer Welle 62 sitzt, die die Antriebsverbindung zur Hydrostatmaschine 21 herstellt. Das auf der Hohlwelle 57 sitzende Zahnrad 58 kämmt mit einem drehbar, aber axial gesichert auf einer Nebenwelle 63 gelagerten Zahnrad 64, mit dem über eine Nabe beabstandet eine Kupplungsscheibe 65 verbunden ist. Auf der Nebenwelle 63 ist außerdem ebenfalls drehbar, aber axial gesichert ein weiteres Zahnrad 66 gelagert, das auch über eine Nabe beabstandet eine Kupplungsscheibe 67 trägt und mit dem am Steg 50 angeordneten Zahnrad 53 kämmt. Räumlich zwischen den beiden Kupplungsscheiben 65, 67 ist die Kupplungsmuffe 68 einer Wechsel-Synchronschalt-Kupplung WSK2 drehfest auf einer an der Nebenwelle 63 befestigten Mitnehmerbuchse angeordnet und aus einer neutralen, antriebslosen "0"-Stellung in eine Kupplungsstellung "a", in der das Zahnrad 64 an die Nebenwelle 63 angekuppelt ist, oder eine Kupplungsstellung "b" axial verschiebbar, in der das Zahnrad 66 an die Nebenwelle 63 angekuppelt ist. Die Nebenwelle 63 kann direkt die mechanische Verbindung zwischen Planetendifferential 20 und Hydrostatmaschine 22 herstellen, in welchem Fall letztere mit ihrer Welle direkt mit der Nebenwelle 63 verbunden wäre. Im dargestellten Fall jedoch trägt die Nebenwelle 63 ein Zahnrad 69, das als Teil einer Übersetzung zur Hydrostatmaschine 22 mit einem Zahnrad 70 kämmt, welches drehfest auf einer Welle 71 sitzt, die die mechanische Verbindung zur Welle der Hydrostatmaschine 22 herstellt.

Die Hydrostatmaschine 22 ist mittels der Wechsel-Synchronschalt-Kupplung WSK2 in Kupplungsstellung "a" mit dem kleinen Sonnenrad 48 des Planetendifferentials 20 oder alternativ in Kupplungsstellung "b" mit der Ausgangshohlwelle 49 des Leistungsverzweigungsgetriebes 6 verbindbar.

Diese die ausgangsseitige Hauptwelle des Leistungsverzweigungsgetriebes 6 bildende Hohlwelle 49 steht permanent, beispielsweise über den dargestellten, aus den Zahnrädern 72 (drehfest an 49), 73 (drehbar auf einer Zwischenwelle 74) und 75 (drehfest an 11) bestehenden Getriebezug der Übersetzung 1 : 1 mit der Eingangswelle 11 des Verteilerdifferentials 9 in Verbindung.

Die Kupplungsstellung "b" von WSK2 ist in einem Betriebsbereich gegeben, in dem sich die Abtriebsdrehzahl $n_{ab}$, gegeben an der Eingangswelle 11 des Verteilerdifferentials 9, zwischen 0 und 0,2 $n_{abmax}$ bewegt. Die Hydrostatmaschine 21 arbeitet in diesem Fall bei einer Drehrichtung des Hohlrades 55 umgekehrt zur Drehrichtung des großen Sonnenrades 47 als Pumpe und liefert umgesetzte Leistung über die hydraulischen Leitungen 23 bzw. 24 an die Hydrostatmaschine 22, die als Motor arbeitet und über den geschlossenen Getriebezug 71, 70, 69, 63, 66, 53, 54, 50, 49, 72, 73, 75 Leistung an das Verteilerdifferential 9 abgibt. Dabei wird etwa 1/3 der Motorantriebsleistung umgesetzt und eine Momentenerhöhung um ca. Faktor 6 erzielt.

Der andere Teil, etwa 2/3 der Motorantriebsleistung wird bei offener Kupplung SK4 und gleichzeitig geschlossener Kupplung SK3 vom Planetendifferential 40 bzw. 40'des Momentenerhöhungsgetriebes 8 über einen Getriebezug mit großer Übersetzung von beispielsweise 1 : 12 in Abtriebsleistung umgesetzt. Dieser Getriebezug besteht aus einem aus einem Zahnrad 76, das a) im Beispiel gemäß Fig. 1 drehfest an der Stegwelle 42/1 des Planetendifferentials 40 bzw. b) im Beispiel gemäß Fig. 2 an der Welle 89 des mit seiner Innenverzahnung 87 mit den Planetenrädern 86 kämmenden Hohlrades 88 angeschlossen ist und in beiden Fällen mit einem durchmessergrößeren Zahnrad 77 kämmt, welches ein drehfest an ihm angeordnetes durchmesserkleineres Zahnrad 78 trägt, das mit einem durchmessermäßig wesentlich größeren Zahnrad 79 kämmt, welches durch die Synchron-Schalt-Kupplung SK3 mit der Eingangswelle 11 des Verteilerdifferentiales 9 kuppelbar bzw. entkuppelbar ist, und zwar vermittels einer auf einer fest mit der Eingangswelle 11 verbundenen Hülse axial verschiebbaren Kupplungsmuffe 80, die bei Synchrondrehzahl zwischen Eingangswelle 11 und Zahnrad 79 mit einer drehfest an letzterem angeordneten Kupplungsring 81 in Kupplungsverbindung kommt.

Die Übersetzung des Planetendifferentiales 40 bzw. 40' ist nur dann wirksam, wenn die Synchron-Schalt-Kupplung SK4 offen ist. Durch Schließen von SK4

a) im Beispiel gemäß Fig. 1 mittels der auf einer fest mit der Hohlwelle 46 verbundenen Hülse axial verschiebbaren Kupplungsmuffe 82, die bei Synchrondrehzahl zwischen Hohlwelle 46 und Steg 42 mit einer drehfest an letzterem angeordneten Kupplungsring 83 in Kupplungsverbindung kommt, bzw.

b) im Beispiel gemäß Fig. 2 mittels einer fest mit der Hohlwelle 46 verbundenen Hülse axial verschiebbaren Kupplungsmuffe 92, die bei Synchrondrehzahl zwischen Hohwelle 46 und Steg 85 und Hohlwelle 88 mit einem drehfest am Steg 85 angeordneten Kupplungsring 91 in Kupplungsverbindung kommt,

ist das Planetendifferential 40 bzw. 40' sperrbar und mit der Zentralwelle 25, 26 verblockbar. Die vorher beispielsweise Faktor 4 betragende Übersetzung des Planetendifferentials 40 bzw. 40' ist nach Sperrung des letzteren auf 1 reduziert.

Mit 84 ist eine elektronische Regel- und Steuereinrichtung bezeichnet, die die Steuerung der Schwenkwinkelverstellung der beiden Hydrostatmaschinen 21, 22 sowie die Schaltung der Kupplungen WSK1, WSK2, SK3, SK4 bewirkt, und zwar auf der Basis einer Vielzahl ihr zugeführter Istwerte von Drehzahlen aller für die Regelung bzw. Steuerung zu erfassender Wellen, welche Drehzahl-Istwerte von entsprechenden, nicht dargestellten Sensoren an den betreffenden Wellen erfaßt und über Meldeleitungen der Regel- und Steuereinrichtung 84 zugeführt werden. Letztere gibt über Steuerleitungen entsprechende Schalt- bzw.

4

Betätigungsbefehle an die angeschlossenen Organe aus. Dabei ergeben sich Verhältnisse, die nachstehend näher erläutert sind.

Als Ausgangszustand für nachfolgende Funktionsbetrachtung sei angenommen, daß das Fahrzeug stillsteht. Soll aus dem Stillstand rückwärts angefahren werden, wird die Drehrichtung der Zentralwelle 25, 26 durch Schalten der Kupplung WSK1 in Kupplungsstellung "a" vorgewählt. Soll dagegen aus dem Stillstand vorwärts angefahren werden, wird die andere Drehrichtung der Zentralwelle 25, 26 durch Schalten der Kupplung WSK1 in Kupplungsstellung "b" vorgewählt. Außerdem befindet sich vor dem Anfahren die Kupplung WSK2 in Schaltstellung "b", so daß die Hydrostatmaschine 22 Leistung über den Ausgang 49 des Leistungsverzweigungsgetriebes 6 und den Getriebezug 72, 73, 75 an das Verteilerdifferential 9 und über dieses an die angeschlossenen Achsantriebssträge 18, 19 abgeben kann. Außerdem sind vor dem Anfahren die Kupplung SK3 geschlossen, die Kupplung SK4 dagegen offen. Dies bedeutet, daß damit Leistung an das Verteilerdifferential 9 auch vom Planetendifferential 40 bzw. 40′ des Momentenerhöhungsgetriebes 8 her über die große Übersetzung 76, 77, 78, 79 übertragen werden kann.

Betrachtet werden ausgehend von diesen genannten Kupplungsschaltzuständen zunächst die nach dem Anfahren für Kriechgangfahrt gegebenen Verhältnisse, welcher Betriebsbereich sich zwischen 0 und 0,2 $n_{abmax}$ der Eingangswelle 11 des Verteilerdifferentiales 9 erstreckt. In diesem Betriebsbereich arbeitet die Hydrostatmaschine 21 als Pumpe und liefert die umgesetzte Leistung über die Leitungen 23, 24 an die Hydrostatmaschine 22, die jetzt als Motor arbeitet und ihre Leistung mechanisch an den angeschlossenen Getriebezug abgibt. Die Hydrostatmaschine 22 ist und bleibt in diesem Betriebsbereich immer auf Maximalverschwenkwinkel eingestellt. Die Hydrostatmaschine 21 dagegen wird in diesem Betriebsbereich entsprechend der Drehzahlzunahme von $n_{ab}$ an der Eingangswelle 11 des Verteilerdifferentials 9 von "Null"-Schwenkwinkel ausgehend zum Maximum-Schwenkwinkel hin verstellt.

Beim Anfahren und Betreiben des Fahrzeugs innerhalb des genannten Betriebsbereiches wird das vom Antriebsmotor 1 über das Schwungrad 2 und das Wendegetriebe 4 in die Zentralwelle 25, 26 eingeleitete Antriebsmoment zu etwa 2/3 über den Steg 42 des Planetendifferentials 40 (Fig. 1) bzw. das Hohlrad 88 des Planetendifferentials 40′ (Fig. 2) und die große Übersetzung 76, 77, 78, 79 an die Eingangswelle 11 des Verteilerdifferentials 9 geleitet und dabei dieser Momentenanteil um etwa Faktor 20 erhöht, während das restliche Teil (etwa 1/3) des in die Zentralwelle 25, 26 eingeleiteten Antriebsmomentes vom kleinen Sonnenrad 45 des Planetendifferentials 40 (Fig. 1) bzw. Sonnenrad 90 des Planetendifferentials 40′ (Fig. 2) über die Hohlwelle 46 an das große Sonnenrad 47 des Planetendifferentials 20 im Leistungsverzweigungsgetriebe 6 abgegeben wird und bei stillstehendem bzw. anschließend langsam drehenden Steg 50 über die Planetenräder 51, 52 das Hohlrad 55 und die Übersetzung 60, 61 den Antrieb der als Pumpe arbeitenden Hydrostatmaschine 21 bewirkt. Die hierdurch hydrostatisch Leistung bekommende, als Motor arbeitende Hydrostatmaschine 22 gibt ihre Leistung mechanisch über den geschlossenen Getriebezug 70, 69, 63, 66, 53, 54, 50, 49, 72, 73, 75 ebenfalls an die Eingangswelle 11 des Verteilerdifferentials 9 ab und bewirkt dabei eine Erhöhung des eingeleiteten Antriebsmomententeils um etwa Faktor 6.

Mit steigender Abtriebsdrehzahl $n_{ab}$ an der Eingangswelle 11 des Verteilerdifferentials 9 ergibt sich bei einer gegebenen Drehzahl des Antriebsmotors 1 und gestiegener Drehzahl des Steges 42 im Planetendifferential 40 (Fig. 1) bzw. des Hohlrades 80 im Planetendifferential 40′ (Fig. 2) eine Synchrondrehzahl zwischen Steg 42 bzw. 85 und Hohlwelle 46. In diesem Augenblick wird die Kupplung SK4 geschlossen und die Kupplung SK3 geöffnet. Durch das Schließen der Kupplung SK4 wird das Planetendifferential 40 bzw. 40′ gesperrt und mit der Zentralwelle 25, 26 zu einer direkt mit dieser synchron mitrotierenden Einheit verblockt. Dies bedeutet, daß dann das große Sonnenrad 47 des Planetendifferentials 20 im Leistungsverzweigungsgetriebe 6 direkt mit der Zentralwelle 25, 26 verbunden ist. Die Hydrostatmaschine 21 arbeitet im folgenden dann mit steigendem Fördervolumen als Pumpe, die Hydrostatmaschine 22 arbeitet weiter mit vollem Moment als Motor und gibt ihre Leistung nach wie vor an die Eingangswelle 11 des Verteilerdifferntials 9 ab.

Sofern das Fahrzeug über diesen Kriechgangfahrtbereich hinaus beschleunigt werden soll, dann wird beim Übergang in den Normalfahrtbereich ($n_{ab}$ an 11 größer etwa 0,2 $n_{ab\ max}$) der Schwenkwinkel der Hydrostatmaschine 21 zum Maximum hin verstellt und dort gehalten, während der Schwenkwinkel der Hydrostatmaschine 22 vom Maximum ausgehend nach "Null" verschwenkt wird. In dem Moment, wenn die Hydrostatmaschine 21 ihr Maximum erreicht und praktisch stillsteht, d.h., nicht mehr dreht, ist Synchrondrehzahl zwischen den Zahnrädern 65 und 67 gegeben, so daß die Kupplung WSK2 in Kupplungsposition "a" umgeschaltet werden kann. Danach ist die Hydrostatmaschine 22 mit dem kleinen Sonnenrad 48 des Planetendifferentials 20 im Leistungsverzweigungsgetriebe 6 verbunden, erhält hierüber seine Antriebsleistung und arbeitet fortan als Pumpe, die ihre Leistung hydrostatisch über die Leitungen 23, 24 an die fortan als Motor arbeitende Hydrostatmaschine 21 liefert. Bei steigender Drehzahl des Steges 50 wird der Schwenkwinkel der Hydrostatmaschine 22 erneut bis auf Maximum verstellt und anschließend der Schwenkwinkel der Hydrostatmaschine 21 von Maximum ausgehend nach "Null" zurückgenommen.

Wie die vorstehende Beschreibung zeigt, ist mit der erfindungsgemäßen Getriebekonfiguration in dem Betriebsbereich, wo notwendig, im Fahrzeug ein extrem überhöhtes Antriebsmoment an den Achsantriebssträngen bereitstellbar, gleichzeitig aber der Übergang in andere Betriebszustände ruckfrei und ohne Zugkraftunterbrechung möglich.

**Patentansprüche**

1. Antriebseinrichtung, insbesondere für ein extremgeländegängiges Radfahrzeug, mit einem Antriebsmotor (1) und einem hydrostatisch-mechanischen Leistungsverzweigungsgetriebe (6), bestehend aus einem mindestens vierwelligen Planetendifferential (20) mit mindestens zwei Reihen von Planetenrädern (51, 52), zwei Sonnenrädern (47, 48), einem Steg (50) und einem Hohlrad (55), ferner mit zwei den Eingang bzw. Ausgang bildende und jeweils an verschiedene Wellen des Planetendifferentials (20) angeschlossenen Hauptwellen (46, 49), und mit mindestens zwei Hydrostatmaschinen (21, 22), die jeweils in mindestens einem Betriebsbereich an einer eigenen Welle des Planetendifferentials (20) angeschlossen sind und wechselweise als Pumpe oder Motor arbeiten, wobei mindestens eine (22) der Hydrostatmaschinen (21, 22) bei zumindest annähernd stillstehender anderer Hydrostatmaschine (21) von der ausgangsseitigen Hauptwelle (49) zu dem nichtantriebsseitigen Sonnenrad (48) beim Übergang vom einen in den anderen Betriebsbereich über schaltbare Kupplungen (WSK2, 65-68-67) umschaltbar ist und im Zugbetrieb von Motor- auf Pumpenfunktion wechselt, dadurch gekennzeichnet,

daß - für einen Einsatz in einem Antriebsstrang mit fallweise notwendig hohem Wandlungsbereich - die Antriebsleistung des Antriebsmotors (1) in eine Welle (25, 26) eingeleitet wird über ein deren Drehrichtung für Vorwärts- oder Rückwärtsfahrt umkehrendes Wendegetriebe (4), daß an die Welle (25, 26) ein Planetendifferential (40 bzw. 40′) angeschlossen ist, von dem unter Zuhilfenahme zweier Synchronschaltkupplungen (SK3, SK4) je nach Schaltzustand derselben das von der Welle (25, 26) her eingespeiste Antriebsmoment entweder

a) vollständig als Eingangsmoment dem Leistungsverzweigungsgetriebe (6) zuführbar, oder

b) in ein Eingangsmoment für das Leistungsverzweigungsgetriebe (6) und ein Abtriebsmoment aufteilbar ist, welch letzteres einer Teil des Abtriebes bildenden und außerdem permanent über einen Getriebezug (72, 73, 75) mit der ausgangsseitigen Hauptwelle (49) des Leistungsverzweigungsgetriebes (6) verbundenen Welle (11) zuführbar ist,

wobei der Zustand b) im Betriebsbereich von < $0,2n_{abmax}$ (maximale Abtriebsdrehzahl) der Welle (11) gegeben ist und der Wechsel in den Zustand a) bei Synchrondrehzahl zwischen eingangsseitiger und ausgangsseitiger Hauptwelle des Planetendifferentials (40) erfolgt.

2. Antriebseinrichtung nach Anspruch 1, dadurch gekennzeichnet, daß vom Planetendifferential (40 bzw. 40′) im Zustand b) die Aufteilung des über die Welle (25, 26) zugeführten motorseitigen Antriebsmomentes in einem solchen Verhältnis erfolgt, daß etwa 1/3 als Eingangsmoment dem Leistungsverzweigungsgetriebe (6) mit einer Momentenerhöhung um etwa Faktor 6 und der Rest, etwa 2/3, als Ausgangsmoment über eine große Übersetzung (76, 77, 78, 79) mit einer Momentenerhöhung um etwa Faktor 20 der Welle (11) zuführbar ist.

3. Antriebseinrichtung nach Anspruch 1, dadurch gekennzeichnet, daß die Welle (25, 26) die Zentralwelle der gesamten Getriebeanordnung bildet.

4. Antriebseinrichtung nach einem der vorhergehenden Ansprüche, dadurch gekennzeichnet, daß die Welle (25, 26) die zentrale Eingangswelle des Planetendifferentials (40) bildet und ein großes Sonnenrad (41) des letzteren drehfest trägt, während das kleine Sonnenrad (45) dieses Planetendifferentials (40) mit der eingangsseitigen Hauptwelle (46) des Planetendifferentials (20) des Leistungsverzweigungsgetriebes (6) verbunden ist, wobei mit den beiden Sonnenrädern (41, 45) auf einem Steg (42) drehbar gelagerte Doppelplanetenräder (43, 44) kämmen und der besagte Steg (42) Teil der ausgangsseitigen Hauptwelle des Planetendifferentials (40) ist, und daß im Betriebsbereich gemäß Zustand b) die Kupplung (SK4), welche den Steg (42) des Planetendifferentials (40) mit der eingangsseitigen Hauptwelle (46) des Leistungsverzweigungsgetriebes (6) kuppeln kann, geöffnet ist und die Kupplung (SK3), welche eine vom Steg (42) her angetriebene große Getriebeübersetzung (76, 77, 78, 79) mit der besagten Welle (11) kuppeln kann, geschlossen ist, jedoch bei Erreichen von Synchrondrehzahl zwischen Steg (42) und Hauptwelle (46) der Übergang vom Zustand b) in den Zustand a) erfolgt und die Kupplung (SK4) geschlossen, gleichzeitig die Kupplung (SK3) geöffnet wird, somit dann das Planetendifferential (40) gesperrt ist und mit der Welle (25, 26) zu einer Einheit verblockt umläuft und die motorseitige Antriebsleistung ausschließlich auf das Leistungsverzweigungsgetriebe (6) übertragen wird (Fig. 1).

5. Antriebseinrichtung nach einem der Ansprüche 1 bis 3, dadurch gekennzeichnet, daß die Welle (25, 26) die zentrale Eingangswelle des Planetendifferentials (40′) bildet und drehfest den Steg (85) des letzteren trägt, auf dem Planetenräder (86) drehbar gelagert sind, die einerseits mit der Innenverzahnung (87) eines Hohlrades (88), das Teil der ausgangsseitigen Hauptwelle des Planetendifferentiales (40′) ist, und andererseits mit einem

EP 0 365 772 B1

Sonnenrad (90) kämmen, das mit der eingangsseitigen Hauptwelle (46) des Planetendifferentials (20) des Leistungsverzweigungsgetriebes (6) verbunden ist, und daß im Betriebsbereich gemäß Zustand b) die Kupplung (SK4), welche den Steg (85) des Planetendifferentials (40') mit der eingangsseitigen Hauptwelle (46) des Leistungsverzweigungsgetriebes (6) kuppeln kann, geöffnet ist, die Kupplung (SK3) dagegen, welche eine vom Hohlrad (88) her angetriebene große Getriebeübersetzung (76, 77, 78, 79) mit der besagten Welle (11) kuppeln kann, geschlossen ist, jedoch bei Erreichen von Synchrondrehzahl zwischen Steg (42) und Hauptwelle (46) der Übergang vom Zustand b) in den Zustand a) erfolgt und die Kupplung (SK4) geschlossen, gleichzeitig die Kupplung (SK3) geöffnet wird, somit dann das Planetendifferential (40') gesperrt ist und mit der Welle (25, 26) zu einer Einheit verblockt umläuft und die motorseitige Antriebsleistung ausschließlich auf das Leistungsverzweigungsgetriebe (6) übertragen wird (Fig. 2).

6. Antriebseinrichtung nach Anspruch 1, dadurch gekennzeichnet, daß das Antriebsmoment des Antriebsmotors (1) über ein Schwungrad (2) dem diesem nachgeschalteten Wendegetriebe (4) zuführbar und von letzterem in die Welle (25, 26) einleitbar ist.

7. Antriebseinrichtung nach Anspruch 1 oder 6, dadurch gekennzeichnet, daß ein solches Wendegetriebe (4) verwendet ist, mit dem die Antriebsleistung des Antriebsmotors (1) bzw. des von diesem angetriebenen Schwungrades (2) auf die Welle (25, 26) in Rückwärtsdrehrichtung mit gegenüber Vorwärtsdrehrichtung größerer Übersetzung übertragbar ist.

8. Antriebseinrichtung nach den Ansprüchen 2, 6, und 7, dadurch gekennzeichnet, daß das Wendegetriebe (4) von der Welle (25,26) zentral durchdrungen ist, die einenendes drehbar innerhalb einer Lageraufnahme des Schwungrades (2) koaxial zu dessen Rotationsachse gelagert ist, und daß das Schwungrad (2) über eine geeignete Kupplung (28) mit der die Welle (25, 26) koaxial umgebenden Eingangswelle (29) des Wendegetriebes (4) verbunden ist.

9. Antriebseinrichtung nach den Ansprüchen 2, 6, 7, 8, dadurch gekennzeichnet, daß das Wendegetriebe (4) aus folgenden Einzelteilen besteht, nämlich einem drehfest an der Eingangswelle (29) angeordneten Sonnenrad (30) eines Planetendifferentiales, das des weiteren ein drehfest an der Welle (25, 26) angeschlossenes Hohlrad (31) mit Innenverzahnung (32), ferner wenigstens ein mit letzterer und dem Sonnenrad (30) in Eingriff stehendes sowie auf einem Steg (33) drehbar gelagertes Planetenrad (34, 35) aufweist, einer Wechsel-Synchronklauenkupplung (WSK1), deren aus einer neutralen, antriebslosen mittleren 0-Stellung nach der einen oder anderen Richtung in eine Kupplungsstellung "a" oder "b" axial verschiebbare Kupplungsmuffe (36) in fester Antriebsverbindung mit einer am Steg (33) angeschlossenen Mitnehmerhülse (37) steht.

10. Antriebseinrichtung nach Anspruch 9, dadurch gekennzeichnet, daß die Kupplungsmuffe (36) der Wechsel-Synchronklauenkupplung (WSK1) bei Verschiebung in Kupplungsposition "a" für Rückwärtsfahrt mit einem drehfest innen am Gehäuse (5) des Wendegetriebes (4) angeordneten Kupplungsring (38) in Eingriff kommt, wodurch eine starre Verbindung zwischen letzterem und dem Steg (33) hergestellt ist, somit letzterer nicht mehr um die Eingangswelle (29) rotieren kann und die Antriebsübertragung vom Antriebsmotor (1) bzw. Schwungrad (2) in umgekehrtem Drehsinn gegenüber Vorwärtsfahrt mit entsprechender Übersetzung über die Eingangswelle (29), das Sonnenrad (30), die räumlich festgehaltenen, aber nach wie vor am Steg (33) drehbaren Planetenräder (34, 35), das Hohlrad (31) zur Welle (25, 26) gegeben ist.

11. Antriebseinrichtung nach Anspruch 9, dadurch gekennzeichnet, daß die Kupplungsmuffe (36) der Wechsel-Synchronklauenkupplung (WSK1) bei Verschiebung in Kupplungsposition "b" für Vorwärtsfahrt mit einem fest außen am Hohlrad (31) angeordneten Kupplungsring (39) in Eingriff kommt, wodurch eine starre Verbindung zwischen Steg (33) und Hohlrad (31) gegeben, damit dieses Planetendifferential gesperrt ist und Antriebsleistung vom Antriebsmotor (1) bzw. Schwungrad (2) direkt drehrichtungssynchron über die Eingangswelle (29) und das Hohlrad (31) auf die Welle (25, 26) übertragbar ist.

12. Antriebseinrichtung nach Anspruch 4, dadurch gekennzeichnet, daß am Steg (42) des Planetendifferentials (40) ein zur Rotationsachse koaxialer Kupplungsring (83) angeordnet ist, mit dem die Kupplungsmuffe (82) der Kupplung (SK4) in und außer Eingriff bringbar ist, während an der fest mit dem Steg (42) verbundenen Stegwelle (42/1) drehfest das erste Zahnrad (76) der über die Kupplung (SK3) mit der Welle (11) kuppelbaren großen Getriebeübersetzung (76, 77, 78, 79) angeschlossen ist.

13. Antriebseinrichtung nach Anspruch 5, dadurch gekennzeichnet, daß am Steg (85) des Planetendifferentials (40') ein zur Rotationsachse koaxialer Kupplungsring (91) angeordnet ist, mit dem die Kupplungsmuffe (92) der Kupplung (SK4) in und außer Eingriff bringbar ist, während an der Hohlradwelle (89) drehfest das erste Zahnrad (76) der über die Kupplung (SK3) mit der Welle (11) kuppelbaren großen Getriebeübersetzung (76, 77, 78, 79) angeschlossen ist.

14. Antriebseinrichtung nach den Ansprüchen 12 und 13, dadurch gekennzeichnet, daß die Übersetzung (76, 77, 78, 79) zwischen dem Planetendifferential (40 bzw. 40') und der Welle (11) ein Vielfaches der Übersetzung (72, 73, 74, 75) zwischen dem Ausgang (Welle 49) des Leistungsverzweigungsgetriebes (6) und der Welle (11) beträgt.

7

EP 0 365 772 B1

15. Antriebseinrichtung nach einem der vorhergehenden Ansprüche, dadurch gekennzeichnet, daß es sich bei der Welle (11) um die Eingangswelle eines Verteilerdifferentials (9) handelt, an dessen beiden Abtriebswellen (16, 17) je ein Achsantriebsstrang (18 bzw. 19) angelenkt ist.

16. Antriebseinrichtung nach einem der vorhergehenden Ansprüche, dadurch gekennzeichnet, daß das Leistungsverzweigungsgetriebe (6) räumlich zwischen dem sich einerseits anschließenden Wendegetriebe (4) und dem sich andererseits anschließenden Momentenerhöhungsgetriebe (8) angeordnet ist, und daß die Wellen (46, 49) konzentrisch zueinander und zur zentralen Welle (25, 26) angeordnet sind.

## Claims

1. A drive device, more particularly for a wheeled vehicle having extreme cross-country mobility, comprising a drive motor (1) and a hydrostatic-mechanical power branching gearing (6), which is formed by an at least four-shaft planet differential (20) with at least two rows of planet wheels (51, 52), two sun wheels (47, 48), a crosspiece (50) and an internal gear (55), furthermore with two main shafts (46, 49) forming the input and output and connected in each case to different shafts of the planet differential (20), and with at least two hydrostatic machines (21, 22), which are connected in each case in at least one operating mode to a separate shaft of the planet differential (20) and operate alternately as a pump or motor, at least one (22) of the hydrostatic machines (21, 22) being switchable during the transition from one operating range into the other via switchable couplings (WSK2, 65-68-67) from the output-side main shaft (49) to the non drive-side sun wheel (48) and changing during drawing operation from motor to pump function, whilst the other hydrostatic machine (21) is at least approximately stationary,
characterised in that
for use in a drive line with an occasionally necessarily high conversion range - the drive power of the drive motor (1) is introduced into a shaft (25, 26) via a reversing gear (4) reversing the direction of rotation of the shaft for forward or reverse drive, a planet differential (40 or 40') is connected to the shaft (25, 26), by means of which planet differential, with the aid of two synchronous switching couplings (SK3, SK4) depending on the switching state of said couplings, the drive moment supplied by the shaft (25, 26) is either
    a) supplied in its entirety as input moment to the power branching gearing (6), or
    b) can be divided into input moment for the power branching gearing (6) and output moment, the latter being supplied to a shaft (11) forming part of the output and also permanently connected via a gear train (72, 73, 75) with the output-side main shaft (49) of the power branching gearing (6),
mode b) existing in the operating range from < $0.2n_{abmax}$ (maximum output velocity) of the shaft (11) and the change-over to mode a) being effected when the rotational speeds of the input-side and output-side main shafts of the planet differential (40) are synchronised.

2. A drive device according to claim 1, characterised in that the division of the motor-side drive moment supplied via the shaft (25, 26) by the planet differential (40 or 40') during mode b) is effected in such a manner that approximately 1/3 is supplied as input moment to the power branching gearing (6) with a moment increase by a factor of approximately 6 and the rest, approximately 2/3, is supplied as output moment via a large transmission (76, 77, 78, 79) to the shaft (11) with a moment increase by a factor of approximately 20.

3. A drive device according to claim 1, characterised in that the shaft (25, 26) forms the central shaft of the entire gearing arrangement.

4. A drive device according to one of the preceding claims, characterised in that the shaft (25, 26) forms the central input shaft of the planet differential (40) and supports a large sun wheel (41) of the planet differential in a rotationally rigid manner, whilst the small sun wheel (45) of said planet differential (40) is connected with the input-side main shaft of the planet differential (20) of the power branching gearing (6), double planet wheels (43, 44) rotatably mounted on a crosspiece (42) meshing with the two sun wheels (41, 45) and the said crosspiece (42) being part of the output-side main shaft of the planet differential (40), and in the operating range according to mode b), the coupling (SK4), which can couple the crosspiece (42) of the planet differential (40) with the input-side main shaft (46) of the power branching gearing (6), is open and the coupling (SK3), which can couple a large gearing transmission (76, 77, 78, 79) driven by the crosspiece (42) with the shaft (11), is closed, but as soon as the rotational speeds of the crosspiece (42) and main shaft (46) are synchronised, the transition from mode b) to mode a) takes place and the coupling (SK4) is closed and the coupling (SK3) is simultaneously opened, so that the planet differential (40) is then blocked and rotates in blocked fashion as a unit with the shaft (25, 26) and the motor-side drive power is transmitted exclusively to the power branching gearing (6) (Fig. 1).

5. A drive device according to one of claims 1 to 3, characterised in that the shaft (25, 26) forms the central input shaft of the planet differential (40') and supports the crosspiece (85) of said planet differential in a

8

rotationally rigid manner, planet wheels (86) being rotatably mounted on said crosspiece (85), which planet wheels mesh on the one hand with the inner toothing (87) of an internal gear (88), which is part of the output-side main shaft of the planet differential (40'), and on the other hand with a sun wheel (90), which is connected with the input-side main shaft (46) of the planet differential (20) of the power branching gearing (6), and in the opearting range according to mode b), the coupling (SK4), which can couple the crosspiece (85) of the planet differential (40') with the input-side main shaft (46) of the power branching gearing (6), is open, wheras the coupling (SK3), which can couple a large gearing transmission (76, 77, 78, 79) driven by the internal gear (88) with the shaft (11), is closed, but as soon as the rotational speeds of the crosspiece (42) (sic) and main shaft (46) are synchronised, the transition from mode b) to mode a) takes place and the coupling (SK4) is closed and the coupling (SK3) is simulataneously opened, so that the planet differential (40') is then blocked and rotates in blocked fashion as a unit with the shaft (25, 26) and the motor-side drive power is transmitted exclusively to the power branching gearing (6) (Fig. 2).

6. A drive device according to claim 1, characterised in that the drive moment of the drive motor (1) can be supplied via a flywheel (2) to the reversing gear (4) connected downstream of said flywheel and can be introduced from said reversing gear into the shaft (25, 26).

7. A drive device according to claim 1 or 6, characterised in that a reversing gear (4) is used of the type by means of which the drive power of the drive motor (1) or of the flywheel (2) driven thereby can be transmitted to the shaft (25, 26) in the reverse direction of rotation with a higher transmission ratio than in the forward direction of rotation.

8. A drive device according to claims 2, 6 and 7, characterised in that the reversing gear (4) is centrally penetrated by the shaft (25, 26), which is rotatably mounted at one end inside a bearing recess of the flywheel (2) coaxial to the axis of rotation of said flywheel, and the flywheel (2) is connected via a suitable coupling (28) with the input shaft (29) of the reversing gear (4) coaxially enclosing the shaft (25, 26).

9. A drive device according to claims 2, 6, 7, 8, characterised in that the reversing gear (4) comprises the following individual parts, namely a sun wheel (30) of a planet differential, which sun wheel is rotationally rigidly arranged on the input shaft (29), the planet differential also comprising an internal gear (31) rotationally rigidly connected to the shaft (25, 26) with an inner toothing (32), furthermore at least one planet wheel (34, 35) engaging with the internal gear (31) and the sun wheel (30) and rotatably mounted on a crosspiece (33), and a reversing synchronous claw coupling (WSK1), whose coupling sleeve (36), which is axially displaceable from a neutral, drive-free central 0-position in one direction or the other into a coupling position "a" or "b", has a rigid drive connection with a driving sleeve (37) connected to the crosspiece (33).

10. A drive device according to claim 9, characterised in that the coupling sleeve (36) of the reversing synchronous claw coupling (WSK1) during the displacement into coupling position "a" for reverse drive engages with a coupling ring (38) rotationally rigidly arranged on the inside of the housing (5) of the reversing gear (4), so that a rigid connection is formed between said coupling ring and the crosspiece (33), so that the latter can no longer rotate about the input shaft (29) and the drive transmission is effected from the drive motor (1) or flywheel (2) in the opposite direction of rotation to forward drive with a corresponding transmission via the input shaft (29), the sun wheel (30), the planet wheels (34, 35), which are spatially fixed but are still rotatable on the crosspiece (33), and the internal gear (31) to the shaft (25, 26).

11. A drive device according to claim 9, characterised in that the coupling sleeve (36) of the reversing synchronous claw coupling (WSK1) during the displacement into coupling position "b" for forward drive engages with a coupling ring (39) securely arranged on the outside of the internal gear (31), so that a rigid connection is formed between the crosspiece (33) and the internal gear (31), so that this planet differential is blocked and the drive power can be transmitted from the drive motor (1) or flywheel (2) directly with synchronised directions of rotation via the input shaft (29) and the internal gear (31) to the shaft (25, 26).

12. A drive device according to claim 4, characterised in that a coupling ring (83) coaxial to the rotational axis is arranged on the crosspiece (42) of the planet differential (40), the coupling sleeve (82) of the coupling (SK4) being engageable with and disengageable from said coupling ring (83), whilst the first gear (76) of the large gearing transmission (76, 77, 78, 79) couplable via the coupling (SK3) with the shaft (11) is rotationally rigidly connected to the crosspiece shaft (42/1) securely connected to the crosspiece (42).

13. A drive device according to claim 5, characterised in that a coupling ring (91) coaxial to the rotational axis is arranged on the crosspiece (85) of the planet differential (40'), the coupling sleeve (92) of the coupling (SK4) being engageable with and disengageable from said coupling ring (93), whilst the first gear (76) of the large gearing transmission (76, 77, 78, 79) couplable via the coupling (SK3) with the shaft (11) is rotationally rigidly connected to the hollow wheel shaft (89).

14. A drive device according to claim 12 and 13, characterised in that the transmission (76, 77, 78, 79) between the planet differential (40 or 40') and the shaft (11) is a multiple of the transmission (72, 73, 74, 75) between the ouput shaft (49) of the power branching gearing (6) and the shaft (11).

9

15. A drive device according to one of the preceding claims, characterised in that the shaft (11) is the input shaft of a distribution differential (9), to whose two output shafts (16, 17) a axle drive line (18 or 19) is articulatedly connected in each case.

16. A drive device according to one of the preceding claims, characterised in that the power branching gearing (6) is spatially arranged between the reversing gear (4) adjoining on one side and the moment increasing gear (8) adjoining on the other side, and the shafts (46, 49) are arranged concentric to one another and the central shaft (25, 26).

## Revendications

1. Transmission, en particulier pour un véhicule tout-terrain à roues, comportant un moteur d'entraînement (1) et un mécanisme distributeur de puissance hydrostatique-mécanique (6), constitué d'un différentiel planétaire (20), à quatre arbres au moins, comprenant au moins deux séries de pignons planétaires (51, 52) deux roues solaires (47, 48), une barre (50) et un pignon creux (55), deux arbres principaux (46, 49) jouant respectivement le rôle, d'arbre d'entrée et d'arbre de sortie, raccordés chacun à des arbres différents du différentiel planétaire (20), deux machines hydrostatiques (21, 22) au moins, qui sont reliées chacune, à l'intérieur d'un domaine de fonctionnement au moins, à un arbre propre du différentiel planétaire et qui fonctionnent alternativement en pompe ou en moteur, étant précisé qu'au moins une (22) des machines hydrostatiques (21, 22), lorsque du moins l'autre machine (21) s'approche de l'arrêt, peut, par l'intermédiaire de coupleurs changeurs débrayables (WSK2, 65, 68, 67) voir lorsqu'on passe d'un domaine de fonctionnement à l'autre sa liaison cinématique passer de l'arbre principal (49), côté sortie, à la roue solaire (48) côté non entraîné et sa fonction, pendant le déplacement du véhicule, passer de celle de moteur à celle de pompe, caractérisée :
en ce que pour une utilisation dans un complexe d'entraînement nécessitant le cas échéant une plage étendue de vitesses, la puissance du moteur d'entraînement (1) est transmise à un arbre (25, 26) par l'intermédiaire d'un mécanisme inverseur (4) délivrant le sens de rotation correspondant à la marche avant ou à la marche arrière, en ce que l'arbre (25, 26) étant relié à un différentiel planétaire (40 ou 40') à partir duquel, à l'aide de deux coupleurs changeurs synchrones (SK3, SK4) et selon l'état de commutation de ceux-ci, le couple d'entraînement de l'arbre (25, 26) peut être :
a) soit transmis dans sa totalité, comme couple d'entrée, au mécanisme (6) distributeur de puissance,
b) soit divisé en un couple d'entrée pour le mécanisme (6) distributeur de puissance et un couple de sortie, ce dernier couple pouvant être transmis à un arbre (11) constituant un élément de mécanisme d'entraînement des roues motrices et étant par ailleurs relié en permanence, par un train d'engrenages (72, 73, 75), à l'arbre principal, côté sortie, du mécanisme distributeur de puissance (6),
étant précisé que l'état b est établi dans le domaine de fonctionnement de l'arbre (11) $< 0,2\ n_{abmax}$ (vitesse maximale de sortie) tandis que le passage à l'état a résulte de la synchronisation des vitesses côté entrée et côté sortie de l'arbre principal du différentiel planétaire (40).

2. Transmission selon la revendication 1, caractérisée en ce que le partage, effectué par le différentiel planétaire (40 ou 40') à l'état b, du couple d'entraînement amené côté moteur par l'arbre (25, 26), s'effectue dans un rapport tel qu'un tiers environ peut être transmis comme couple d'entrée au mécanisme distributeur de puissance (6), et se trouve multiplié par un facteur d'environ 6, tandis que le reste, soit les deux tiers, peut être transmis comme moment de sortie à l'arbre (11), par l'intermédiaire d'un train fortement démultiplicateur (76, 77, 78, 79) multipliant le couple par un facteur d'environ 20.

3. Transmission selon la revendication 1, caractérisée en ce que l'arbre (25, 26) est l'arbre central de l'ensemble du système d'engrenages.

4. Transmission selon l'une des revendications précédentes, caractérisée en ce que l'arbre (25, 26) constitue l'arbre central d'entrée du différentiel planétaire (40) et porte une grande roue solaire solidaire (41), tandis que la petite roue solaire (45) de ce différentiel planétaire (40) est en liaison avec l'arbre principal (46), côté entrée, du différentiel planétaire (20) du mécanisme distributeur de puissance (6), les deux roues solaires (41, 45) engrénant avec des pignons planétaires doubles (43, 44) tournant sur une barre (42) faisant partie de l'arbre principal, côté sortie, du différentiel planétaire (40), et en ce que dans le domaine de fonctionnement correspondant à l'état b, le coupleur (SK4), qui peut associer le bras (42) du différentiel planétaire (40) à l'arbre principal (40) côté entrée, du mécanisme distributeur de puissance (6) est ouvert tandis que le coupleur (SK3) qui peut associer un train fortement démultiplicateur (76, 77, 78, 79) entraîné par la barre (42) à l'arbre (11) est fermé, le passage de l'état b à l'état a s'effectuant lorsque le synchronisme des vitesses de la monture (42) et de l'arbre principal (46) est atteint, le coupleur (SK4) se fermant, en même temps que le coupleur (SK3) s'ouvre, ce qui produit l'arrêt du différentiel planétaire (40) qui tourne alors en bloc avec l'arbre (25, 26), la puissance motrice, côté moteur, se trouvant transmise exclusivement au mécanisme distributeur de puissance (6) (figure 1).

5. Transmission selon une des revendications 1 à 3, caractérisée en ce que l'arbre (25, 26) constitue t'arbre central d'entrée du différentiel planétaire (40') et porte solidairement la barre (85) de celui-ci, sur laquelle sont montés en rotation possible les pignons planétaires (86) engrénant d'un côté avec la denture interne (87) d'un pignon creux (88) faisant partie de l'arbre principal, côté sortie, du différentiel planétaire (40'), de l'autre côté avec une roue solaire (90), liée à l'arbre principal (46), côté entrée, du différentiel planétaire (20) du mécanisme distributeur de puissance (6), et en ce que dans le domaine de fonctionnement correspondant à l'état b, le coupleur (SK4), qui peut accoupler la barre (85) du différentiel planétaire (40') et l'arbre principal (46), côté entrée, du mécanisme distributeur de puissance (6), est ouvert, tandis que le coupleur (SK3), qui peut accoupler l'arbre (11) fortement et un train démultiplicateur entraîné par le pignon creux (88), est fermé, le passage de l'état b à l'état a s'effectuant lorsque le synchronisme des vitesses de la barre (42) et de l'arbre principal (46) est atteint, le coupleur (SK4) se fermant en même temps que le coupleur (SK3) s'ouvre, ce qui produit l'arrêt du différentiel planétaire (40') qui tourne alors en bloc avec l'arbre (25, 26), la puissance motrice se trouvant transmise exclusivement au mécanisme distributeur de puissance (6) (figure 2).

6. Transmission selon la revendication 1, caractérisée en ce que le couple du moteur d'entraînement (1) peut être transmis à partir d'un volant (2) à un mécanisme inverseur (4) qui le suit et qui peut le transmettre à l'arbre (25, 26).

7. Transmission selon la revendication 1 ou 6, caractérisée en ce qu'elle met en oeuvre un mécanisme inverseur (4) dans lequel la transmission de la puissance du moteur d'entraînement (1), c'est-à-dire du volant (2) entraîné par le moteur, à l'arbre (25, 26) peut s'effectuer en marche arrière, avec un rapport de démultiplication plus important qu'en marche avant.

8. Transmission selon les revendications 2, 6 et 7, caractérisée en ce que l'inverseur (4) est traversé en son centre par l'arbre (25, 26) monté coaxialement au volant (2) et dont une extrémité tourne dans un palier solidaire du volant, et en ce que ce dernier est relié, par un coupleur approprié (28) à l'arbre d'entrée (29) de l'inverseur (4), coaxial à l'arbre (25, 26) et l'entourant.

9. Transmission selon les revendications 2, 6, 7, 8, caractérisée en ce que l'inverseur (4) est constitué des éléments suivants, à savoir montée solidaire sur l'arbre d'entrée (29), une roue solaire (30) d'un différentiel planétaire qui comporte, monté solidaire sur l'arbre (25, 26) un pignon creux (31 à denture interne (32), au moins un pignon planétaire (34, 35) monté tournant sur une barre (33) et engrénant avec la denture interne (32) et la roue solidaire (30), un coupleur changeur synchrone à crabots (WSK1) qui comporte un manchon d'accouplement (36) qui peut se déplacer axialement tout en restant en prise avec une douille d'entrainement (37) reliée à la barre (33), à partir d'une position médiane 0, sans entraînement, vers une position d'accouplement a ou b, selon le sens du déplacement.

10. Transmission selon la revendication 9, caractérisée en ce que le manchon d'accouplement (36) du coupleur changeur synchrone à crabots (WSK1), lorsqu'on l'amène en position d'accouplement "a" correspondant à la marche arrière, vient en prise avec une couronne d'accouplement montée fixe à l'intérieur du carter (5) de l'inverseur (4), établissant ainsi une liaison rigide entre cette couronne et la barre (33), laquelle ne peut plus tourner autour de l'arbre d'entrée (29), la transmission à l'arbre (25, 26) du mouvement du moteur d'entraînement (1) c'est-à-dire du volant (2) s'effectuant en sens inverse de la marche avant, avec une démultiplication correspondante, à travers l'arbre d'entrée (29), la roue solaire (30), les pignons planétaires (34, 35) fixes dans l'espace, mais continuant à tourner sur la barre (33), le pignon creux (31).

11. Transmission selon la revendication 9, caractérisée en ce que le manchon d'accouplement du coupleur changeur synchrone (WSK1), lorsqu'on l'amène en position d'accouplement b correspondant à la marche avant, vient en prise avec une couronne d'accouplement (39) montée solidaire et à l'extérieur du pignon creux (31), établissant ainsi une liaison rigide entre la barre (33) et le pignon creux (31), le différentiel planétaire se trouve bloqué, la puissance du moteur d'entraînement (1) c'est-à-dire du volant (2) peut être transmise directement et en synchronisme, par l'arbre d'entrée (29) et le pignon creux (31) à l'arbre (25, 26).

12. Transmission selon la revendication 4, caractérisée en ce que la barre (42) du différentiel planétaire (40) est munie d'une couronne d'accouplement (83) coaxiale à l'axe de rotation et qui peut venir en prise avec ou être écartée du manchon d'accouplement (82) du coupleur (SK4), tandis que s'établit la liaison en rotation de l'arbre (42/1) solidaire de la barre (42), et du premier pignon (76) du train fortement démultiplicateur (76, 77, 78, 79) couplable à l'arbre (11) par le coupleur (SK3).

13. Transmission selon la revendication 5, caractérisée en ce que la barre (85) du différentiel planétaire (40') est munie d'une couronne d'accouplement (91) coaxiale à l'axe de rotation et qui peut venir en prise avec ou être écartée du manchon d'accouplement (92) du coupleur (SK4), tandis qu'est établie la liaison en rotation de l'arbre de pignon creux (89) et du premier pignon creux (76) du train fortement démultiplicateur (76, 77, 78, 79) couplable à l'arbre (11) par le coupleur (SK3).

14. Transmission selon les revendications 12 et 13, caractérisée en ce que le rapport du train démultiplicateur (76, 77, 78, 79) entre le différentiel planétaire (40 ou 40′) et l'arbre (11) est un multiple du rapport de démultiplication (72, 73, 74, 75) entre la sortie (arbre 49) du mécanisme distributeur de puissance (6) et l'arbre (11).

15. Transmission selon une des revendications précédentes, caractérisée en ce que l'arbre (11) est l'arbre d'entrée d'un différentiel répartiteur (9) dont les deux arbres de sortie (16, 17) sont articulés respectivement aux arbres des roues motrices (18, 19).

16. Transmission selon une des revendications précédentes, caractérisée en ce que le mécanisme distributeur de puissance (6) est disposé entre l'inverseur (4) qui lui est raccordé d'un côté et le multiplicateur de couple (8), raccordé de l'autre côté, les arbres (46, 49) étant coaxiaux l'un par rapport à l'autre et également par rapport à l'axe central (25, 26).

Fig.1

Fig.2